(19) Europäisches Patentamt
European Patent Office
Office européen des brevets

(11) **EP 1 062 108 B1**

(12) **EUROPÄISCHE PATENTSCHRIFT**

(45) Veröffentlichungstag und Bekanntmachung des Hinweises auf die Patenterteilung:
**19.03.2003 Patentblatt 2003/12**

(51) Int Cl.⁷: **B60G 13/00**, B60G 13/16, B60G 17/02, B60G 17/015

(21) Anmeldenummer: **98966327.3**

(22) Anmeldetag: **14.12.1998**

(86) Internationale Anmeldenummer:
**PCT/EP98/08186**

(87) Internationale Veröffentlichungsnummer:
**WO 99/030915 (24.06.1999 Gazette 1999/25)**

(54) **FAHRZEUGFEDERUNGSSYSTEM**

MOTOR VEHICLE SUSPENSION SYSTEM

SYSTEME DE SUSPENSION DE VEHICULE

(84) Benannte Vertragsstaaten:
**DE ES FR GB IT NL SE**

(30) Priorität: **15.12.1997 DE 19755656**

(43) Veröffentlichungstag der Anmeldung:
**27.12.2000 Patentblatt 2000/52**

(73) Patentinhaber: **FKFS Forschungsinstitut für Kraftfahrwesen und Fahrzeugmotoren D-70569 Stuttgart (DE)**

(72) Erfinder: **HAKEN, Karl-Ludwig D-71116 Gärtringen (DE)**

(74) Vertreter: **Feldkamp, Rainer, Dipl.-Ing. et al Garmischer Strasse 4 80339 München (DE)**

(56) Entgegenhaltungen:
EP-A- 0 344 923          EP-A- 0 518 056
DE-A- 4 241 249          DE-A- 4 310 548
DE-B- 1 043 104          FR-A- 1 149 671
US-A- 5 443 282

**Beschreibung**

Die vorliegende Erfindung betrifft ein Fahrzeugfederungssystem der im Oberbegriff des Patentanspruchs 1 genannten Art.

Beim Befahren unebener Fahrbahnen folgen die Aufstandsflächen der Räder eines Fahrzeugs diesen Unebenheiten, wodurch die Räder entsprechende Vertikalbeschleunigungen erfahren. In Verbindung mit diesen Vertikalbeschleunigungen ergeben sich durch die Masse der Räder und die anteiligen Massen der Radaufhängung, die als ungefederte Massen bezeichnet werden, Radlastschwankungen, die dazu führen, daß die über die Reifenaufstandsfläche übertragbaren Seiten- und Längskräfte ebenfalls schwanken und aufgrund der nicht-linearen Reifeneigenschaften im Mittel herabgesetzt werden, was beispielsweise bei Kurvenfahrten auf unebener Fahrbahn zum Ausbrechen des Fahrzeugs und damit zu Gefahrensituationen führen kann.

Die Radlastschwankungen können zwar durch eine entsprechende Abstimmung der Federung bezüglich der ungefederten Masse und dem Fahrzeugaufbau verringert werden, jedoch führen für die Radlastschwankung optimale Abstimmungen zu einer Vergrößerung der Aufbaubeschleunigungen und damit zu einer Verschlechterung des Fahrkomforts.

Diese nachteilige Wechselwirkung tritt auch bei sogenannten aktiven Fahrwerken auf, bei denen Hydraulikzylinder parallel oder in Reihe zu herkömmlichen Feder- und/oder Dämpfungsgliedern angeordnet sind oder diese ersetzen.

Bei einem Federungssystem der eingangs genannten Art (DE-AS 10 43 104) wurde zur Verbesserung der Schwingungsdämpfung ein Schwingungstilger verwendet, der einerseits mit einem federnd mit dem Lenker verbundenen Element und andererseits an dem Feder- und/oder Dämpfungsglied angelenkt ist. Auch hier ist eine optimale Abstimmung des Fahrzeugfederungssystems schwierig.

Der vorliegenden Erfindung liegt die Aufgabe zugrunde, ein Fahrzeugfederungssystem zu schaffen, das bei gleichzeitiger Verbesserung des Fahrkomforts zu einer Verringerung der Radlastschwankungen bei Fahrt auf unebener Fahrbahn führt.

Diese Aufgabe wird durch die im Patentanspruch 1 angegebenen Merkmale gelöst.

Vorteilhafte Ausgestaltungen und Weiterbildungen der Erfindung ergeben sich aus den Unteransprüchen.

Mit dem erfindungsgemäßen Federungssystem ist es möglich, den Abstand zwischen Rad und Fahrzeugkarosserie zu verändern, ohne daß das Feder- und/oder Dämpfungsglied eine wesentliche Längenänderung erfährt, wodurch die bei herkömmlichen Fahrzeugfederungssystemen beim Überfahren von Fahrbahnunebenheiten auftretenden Radlastschwankungen verringert werden. Die Fahrbahnunebenheiten werden hierzu vorzugsweise durch einen Sensor erfaßt, und der Abstand zwischen Rad und Fahrzeugkarosserie wird über das Element mit veränderbarer Länge entsprechend eingestellt.

Das erfindungsgemäße Federungssystem kann beispielsweise mit Quer-, Längs- oder Diagonallenkern eingesetzt werden, wobei der eine Hebel jeweils quer, längs oder diagonal angeordnet sein kann.

Durch entsprechende Wahl der Hebelverhältnisse in Verbindung mit der vorzugsweise vorgesehenen Zusatzmasse lassen sich besonders vorteilhafte Eigenschaften erzielen, indem die normalerweise durch die Vertikalbeschleunigung der durch das Rad und Teile der Radaufhängung gebildeten ungefederten Masse in die Karosserie eingeleiteten Kräfte durch entsprechende Wahl der Zusatzmasse im wesentlichen kompensiert werden.

Im Falle eines Längslenkers und quer angeordnetem Hebel wird diese Wirkung beispielsweise erzielt, wenn der Anlenkpunkt des Feder- und/oder Dämpfungsgliedes an dem einen Hebel zu einem Ende des Hebels einen ersten Abstand und zu dem anderen Ende des Hebels einen zweiten Abstand derart aufweist, daß das Verhältnis des zweiten Abstandes zum ersten Abstand gleich dem Verhältnis der ungefederten Masse zur Zusatzmasse ist.

Bei anderen Einbauformen gelten zur Erzielung dieser Wirkung ähnliche Zusammenhänge.

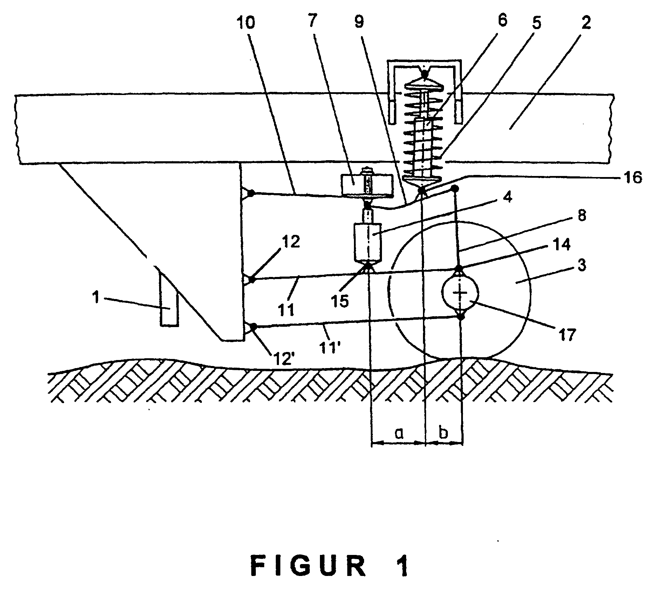

Das erfindungsgemäße Fahrzeugfederungssystem wird nachfolgend anhand einer in der Figur lediglich schematisch dargestellten Ausführungsform noch näher erläutert.

Obwohl das erfindungsgemäße Fahrzeugfederungssystem beispielsweise auch bei Radaufhängungen mit einem oder mehreren quer oder diagonal angeordneten Lenkern oder mit einem Längslenker verwendet werden kann, ist in der Figur eine Ausführungsform mit zwei parallelen Längslenkern 11,11' dargestellt, wobei in diesem Fall ein Radträger 17 vorgesehen ist.

Die Lenker 11,11' führen ein Rad 3, wobei die Lenker 11,11' mit ihrem vom Rad 3 abgewandten Ende jeweils gelenkig an einer Stelle 12,12' der Fahrzeugkarosserie 2 befestigt sind.

Um das Rad 3 an der Fahrzeugkarosserie 2 abzustützen, ist ein Feder- und/oder Dämpfungsglied 6 vorgesehen, das jedoch, wie nachfolgend noch näher erläutert, nicht wie üblich am Lenker angelenkt ist.

Es ist ein Hebel 9 vorgesehen, dessen eines Ende bei der dar-gestellten Ausführungsform über einen zweiten Hebel 8 an einem ersten Anlenkpunkt 14 des Lenkers 11 angelenkt ist. Das zweite Ende des Hebels 9 ist über das Element 4 mit veränderbarer Länge mit einem zweiten Anlenkpunkt 15 des Lenkers 11 verbunden. Das nicht an der Karosserie befestigte Ende des Feder- und/oder Dämpfungsgliedes 6 ist zwischen den Enden des Hebels 9 an diesem angelenkt.

Wird die Länge des Elementes 4, das beispielsweise durch einen Hydraulikzylinder gebildet sein kann, verändert, so kann der Abstand zwischen Rad 3 und Karosserie 2 verändert werden, ohne daß eine Längenänderung des Feder- und/oder Dämpfungsgliedes 6 erfolgt.

Im dargestellten Fall ist der Hebel 9 über einen dritten Hebel 10 mit der Fahrzeugkarosserie 2 verbunden, um die erforderliche Stabilität herzustellen.

Falls die Hebel 8,9,10 und das Element 4 untereinander nicht ausschließlich durch Gelenke mit lediglich einem Freiheitsgrad verbunden sind, können zur Erzielung der dadurch notwendig werdenden zusätzlichen Bindungen weitere Lenker eingesetzt werden.

Die Feder- und/oder Dämpfungskräfte werden im dargestellten Fall über den Hebel 8 und das Element 4 auf die Radaufhängung bzw. den Lenker 11 übertragen.

Beim Überfahren einer Bodenwelle wird die Länge des Elements 4 derart eingestellt, daß sich der Gelenkpunkt, der das Feder- und/oder Dämpfungsglied 6 mit dem Hebel 9 verbindet, im wesentlichen lediglich horizontal bewegt. Hierdurch wird die Länge des Feder- und/oder Dämpfungsgliedes 6 in erster Näherung konstant gehalten, und es werden im wesentlichen keine dynamischen Kräfte in die Fahrzeugkarosserie 2 eingeleitet (bei der dargestellten Ausführungsform ergibt sich eine geringe horizontale Relativbewegung zwischen dem Gelenkpunkt und der Fahrzeugkarosserie und damit eine geringe Schrägstellung des Feder- und/oder Dämpfungsgliedes, dessen Länge sich entsprechend dem Cosinus des Winkels und somit vernachlässigbar ändert).

Es ist besonders vorteilhaft, wenn im Verbindungsbereich zwischen dem Hebel 9 und dem Element 4, wie dargestellt, eine Zusatzmasse 7 vorgesehen ist.

Wenn die Zusatzmasse 7 durch Längenänderung des Elements 4 nach unten bewegt wird, entsteht an der Radaufhängung eine nach oben gerichtete Kraft, die der dynamischen Radlast, die sich bei herkömmlichen Radfederungen einstellen würde, entgegensteht. Bei richtiger Wahl der in der Zeichnung mit a und b bezeichneten Hebelverhältnisse in Abhängigkeit von der Zusatzmasse 7 und der ungefederten Masse, können die dynamischen Radlastschwankungen bei entsprechender Längenänderung des Elements 4 nahezu vollständig eliminiert werden.

Für den geometrisch einfachen (nicht dargestellten) Fall, daß zum Beispiel bei einer Längslenkerhinterachse der Hebel 9 quer zur Fahrtrichtung eingebaut ist und beide Enden des Hebels 9 bezogen auf die Längslenkerdrehachse den gleichen wirksamen Hebelarm aufweisen, gilt für die richtig gewählten Hebelverhältnisse:

$$a/b = \text{ungefederte Masse/Zusatzmasse}$$

wobei die mit der Radführung verbundenen Teile des Elementes mit veränderbarer Länge, der Hebel 8 sowie Anteile des Hebels 9 zu der ungefederten Masse zählen, während die mit der Zusatzmasse verbundenen Teile des Elementes mit veränderbarer Länge sowie ein Teil der Hebel 9,10 zur Zusatzmasse zählen.

Bei entsprechender Änderung der Länge des Elementes 4 wird damit die Summe aus dem Produkt "Zusatzmasse x Vertikalbeschleunigung der Zusatzmasse" und dem Produkt "ungefederte Masse x Radvertikalbeschleunigung" gleich Null oder zumindest ungefähr gleich Null.

Bei anderen Einbauformen gelten wie erwähnt, für den Fachmann nachvollziehbare, ähnliche Zusammenhänge.

Als Zusatzmasse kann jedes Bauteil verwendet werden, dessen Anbaulage flexibel ist und das nicht stoßempfindlich ist.

Für den Fall, daß das Element 4 mit veränderbarer Länge durch eine Gewindespindel und einen Elektromotor gebildet ist, kann der Elektromotor die Zusatzmasse 7 bilden.

Damit die o.g. Summe Null bzw. ungefähr Null ergibt, ist es erforderlich, sowohl den Betrag der Längenänderung des Elementes 4 als auch die Geschwindigkeit dieser Längenänderung um so höher auszulegen, je kleiner die Zusatzmasse ist.

Andererseits sollte die Zusatzmasse auch nicht unnötig groß ausgelegt werden, da sich andernfalls die Fahrzeug-Gesamtmasse zu stark erhöht und im Fall des Ausfalls des Systems (Länge des Elementes 4 bleibt konstant) die ungefederte Masse durch die Zusatzmasse erhöht, was zu einem Anstieg der Radlastschwankungen führt.

Die vorzugsweise vorgesehene Steuerungs- und/oder Regelungseinrichtung hat als Stellgröße die Länge des Elementes 4 und zumindest eine Eingangsgröße wird durch das Ausgangssignal eines Sensors 1 gebildet, der vor dem Rad 3 vorhandene Fahrbahnunebenheiten erfaßt.

Diese Erfassung kann beispielsweise durch Messung des Abstandes zwischen Fahrbahn und Karosserie 2 oder durch Messung der Vertikalbeschleunigung und/oder Vertikalgeschwindigkeit der Vorder- und/oder Hinterräder erfolgen.

Das erfindungsgemäße Fahrzeugfederungssystem kann zusätzlich die Radlastverteilung beeinflussen und den Wankwinkel bei Kurvenfahrt oder den Nickwinkel beim Bremsen reduzieren. Hierzu werden, beispielsweise bei Kurvenfahrt, an den kurvenäußeren Rädern die Längen der Elemente mit veränderbarer Länge vergrößert, und an den kurveninneren Rädern verkleinert. Durch unterschiedliche Verstellwege an den Vorder- und Hinterrädern (sofern beide Achsen mit dem erfindungsgemäßen Fahr-zeugfederungssystem ausgestattet sind) kann dabei auf die Radlastverteilung und somit auf das Eigenlenkverhalten Einfluß genommen werden.

Ist nur eine Achse mit dem erfindungsgemäßen Fahrzeugfederungssystem ausgestattet, während die weitere(n) Achse(n) eine feste Wankabstützung aüfweisen, kann ebenfalls die Radlastverteilung beeinflußt werden.

Obwohl dies nicht dargestellt ist, ist es weiterhin denkbar, parallel zum Element 4 mit veränderbarer Länge ein weiteres Element, beispielsweise in Form einer Feder, anzuordnen, um die zur Längenänderung des Elementes 4 erforderlichen Kräfte zu verringern.

Falls das erfindungsgemäße Fahrzeugfederungssystem bei Fahrzeugen mit Radmotoren eingesetzt werden soll, können die Radmotoren die Zusatzmasse bilden. Ein Radmotor kann dann über entsprechende Getriebe mit dem Rad gekoppelt werden.

Wenn die Vertikalbewegung des Radmotors bei gleichbleibender Radmotordrehzahl eine merkliche Drehzahländerung des Rades bewirkt, kann umgekehrt durch eine dynamische Änderung der Motordrehzahl eine Vertikalbewegung des Radmotors hervorgerufen werden, wobei in diesem Fall das Element 4 durch eine Feder bzw. ein Feder- und/oder Dämpfungselement ersetzt werden kann.

Obwohl das erfindungsgemäße Fahrzeugfe-derungssystem vorstehend anhand einer Ausführungs-form mit Längslenkern näher erläutert wurde, ist es hierauf nicht beschränkt, sondern kann bei beliebigen Lenkerarten wie beispielsweise auch Quer- oder Diagonallenkern eingesetzt werden, wobei der eine Hebel (9) unabhängig von der Lenkerart längs, quer oder diagonal angeordnet sein kann.

**Patentansprüche**

1. Fahrzeugfederungssystem mit zumindest einem durch zumindest einen Lenker (11) geführten Rad (3), das über ein Feder- und/oder Dämpfungsglied (6) an einer Fahrzeugkarosserie (2) abgestützt ist, wobei der Lenker (11) mit seinem vom Rad (3) abgewandten Ende gelenkig an einer Stelle (12) der Fahrzeugkarosserie (2) befestigt ist,
**dadurch gekennzeichnet, daß** ein Hebel (9) vorgesehen ist, zwischen dessen Enden das nicht an der Karosserie befestigte Ende des Feder- und/oder Dämpfungsgliedes (6) angelenkt ist, daß ein Ende des Hebels (9) an einem ersten Anlenkpunkt (14) des Lenkers (11) oder eines Radträgers (17) angelenkt ist, und daß das andere Ende des Hebels (9) mit einem Ende eines Elementes (4) mit veränderbarer Länge verbunden ist, dessen anderes Ende an einem vom ersten Anlenkpunkt (14) beabstandeten zweiten Anlenkpunkt (15) des Lenkers (11) bzw. an dem Radträger (17) oder an der Karosserie (2) angelenkt ist.

2. Fahrzeugfederungssystem nach Anspruch 1,
**dadurch gekennzeichnet, daß** im Bereich der Verbindungsstelle zwischen dem Hebel (9) und dem Element (4) mit veränderbarer Länge eine Zusatzmasse (7) vorgesehen ist.

3. Fahrzeugfederungssystem nach Anspruch 2,
**dadurch gekennzeichnet, daß** die Zusatzmasse derart angeordnet ist, daß sie sich bei einer Änderung der Länge des Elementes (4) im wesentlichen senkrecht zur Fahrbahn bewegt.

4. Fahrzeugfederungssystem nach einem der vorhergehenden Ansprüche,
**dadurch gekennzeichnet, daß** das eine Ende des Hebels (9) über einen zweiten Hebel (8) an dem ersten Anlenkpunkt (14) des Lenkers (11) oder Radträgers (17) angelenkt ist.

5. Fahrzeugfederungssystem nach einem der vorhergehenden Ansprüche,
**dadurch gekennzeichnet, daß** der Bereich der Verbindungsstelle zwischen dem Hebel (9) und dem Element (4) mit veränderbarer Länge über einen dritten Hebel (10) gelenkig mit der Fahrzeugkarosserie verbunden ist.

6. Fahrzeugfederungssystem nach Anspruch 5,
**dadurch gekennzeichnet, daß** der dritte Hebel (10) im wesentlichen parallel zum Lenker (11) angeordnet ist.

7. Fahrzeugfederungssystem nach einem der vorhergehenden Ansprüche,
**dadurch gekennzeichnet, daß** das Element (4) mit veränderbarer Länge zumindest teilweise durch einen Hydraulikzylinder gebildet ist.

8. Fahrzeugfederungssystem nach einem der Ansprüche 1 bis 6,
**dadurch gekennzeichnet, daß** das Element (4) durch eine Gewindespindel und einen Elektromotor gebildet ist.

9. Fahrzeugfederungssystem nach einem der Ansprüche 2 sowie 7 und 8,
**dadurch gekennzeichnet, daß** der Elektromotor die Zusatzmasse (7) bildet.

10. Fahrzeugfederungssystem nach einem der vorhergehenden Ansprüche,
**dadurch gekennzeichnet, daß** die Länge des Elementes (4) jeweils so verändert wird, daß sowohl bei einer kurzfristigen Verringerung als auch bei einer kurzfristigen Vergrößerung des Abstandes zwischen Rad (3) und Fahrzeugkarosserie (2) die Länge des Feder- und/oder Dämpfungsgliedes ungefähr konstant bleibt.

11. Fahrzeugfederungssystem nach einem der vorhergehenden Ansprüche,
**dadurch gekennzeichnet, daß** eine Steuerungs- und/oder Regelungseinrichtung vorgesehen ist, deren Stellgröße die Länge des Elementes (4) ist.

**12.** Fahrzeugfederungssystem nach Anspruch 11, **dadurch gekennzeichnet, daß** ein Sensor (1) zur Erkennung von vor dem Rad (3) vorhandenen Fahrbahnunebenheiten vorgesehen ist, wobei das Ausgangssignal des Sensors (1) eine Eingangsgröße der Steuerungs- und/oder Regelungseinrichtung bildet.

**13.** Fahrzeugfederungssystem nach Anspruch 12, **dadurch gekennzeichnet, daß** der Sensor den Abstand zwischen Fahrbahn und Karosserie (2) mißt.

**14.** Fahrzeugfederungssystem nach Anspruch 12, **dadurch gekennzeichnet, daß** der Sensor die Vertikalbeschleunigung und/oder Vertikalgeschwindigkeit der Vorder- und/oder Hinterräder mißt.

**15.** Fahrzeugfederungssystem nach einem der Ansprüche 2 bis 14, **dadurch gekennzeichnet, daß** der Anlenkpunkt des Feder- und/oder Dämpfungsgliedes (6) an dem Hebel (9) zu dem einen Ende des Hebels (9) einen ersten Abstand (b) und zu dem anderen Ende des Hebels (9) einen zweiten Abstand (a) aufweist, und daß das Verhältnis des zweiten Abstandes (a) zum ersten Abstand (b) gleich dem Verhältnis der durch das Rad (3) und Teile der Radaufhängung gebildeten ungefederten Masse zur Zusatzmasse (7) ist.

**16.** Fahrzeugfederungssystem nach einem der Ansprüche 2 bis 15, **dadurch gekennzeichnet, daß** zum Antrieb des Rades (3) ein Radmotor vorgesehen ist, der die Zusatzmasse (7) bildet.

**17.** Fahrzeugfederungssystem nach Anspruch 16, **dadurch gekennzeichnet, daß** der Radmotor die Längenänderung des Elementes (4) bewirkt.

**18.** Fahrzeugfederungssystem nach einem der vorhergehenden Ansprüche, **dadurch gekennzeichnet, daß** parallel zum Element (4) ein weiteres Feder- und/oder Dämpfungsglied angeordnet ist.

**Claims**

**1.** Vehicle suspension system with at least one wheel (3) which is guided by at least one steering rod (11) and which is supported on a vehicle body (2) via a spring element and/or damping element (6), wherein the steering rod (11) is fixed, in a pivoting manner, with its end facing away from the wheel (3), to a point (12) on the vehicle body (2), **characterised in that** a lever (9) is provided, coupled between the ends of which is that end of the spring element and/or damping element (6) that is not fixed to the vehicle body; that one end of the lever (9) is coupled to a first linkage point (14) of the steering rod (11) or of a wheel carrier (17); and that the other end of the lever (9) is connected to one end of an element (4) of variable length, whose other end is coupled to a second linkage point (15) of the steering rod (11), which [linkage point 15] lies at a distance from the first linkage point (14), or to the wheel carrier (17), or to the vehicle body (2).

**2.** Vehicle suspension system in accordance with claim 1, **characterised in that** an additional mass (7) is provided in the area of the connection point between the lever (9) and the element (4), of variable length.

**3.** Vehicle suspension system in accordance with claim 2, **characterised in that** the additional mass is arranged such that in the event of a change in the length of the element (4), it moves essentially perpendicular to the roadway.

**4.** Vehicle suspension system in accordance with one of the preceding claims, **characterised in that** the one end of the lever (9) is linked via a second lever (8) to the first linkage point (14) of the steering rod (11) or wheel carrier (17).

**5.** Vehicle suspension system in accordance with one of the preceding claims, **characterised in that** the area of the connection point between the lever (9) and the element (4) of variable length is connected in a pivoted manner to the vehicle body via a third lever (10).

**6.** Vehicle suspension system in accordance with claim 5, **characterised in that** the third lever (10) is arranged essentially parallel to the steering rod (11).

**7.** Vehicle suspension system in accordance with one of the preceding claims, **characterised in that** the element (4) of variable length is formed at least in part by a hydraulic cylinder.

**8.** Vehicle suspension system in accordance with one of the claims 1 to 6, **characterised in that** the element (4) is formed by a threaded spindle and an electric motor.

**9.** Vehicle suspension system in accordance with one of the claims 2 as well as 7 and 8, **characterised in that** the electric motor forms the additional mass (7).

**10.** Vehicle suspension system in accordance with one ofthe preceding claims, **characterised in that** the length of the element (4) is in each case altered such that in the case of both a short-term reduction and a short-term increase in the distance between the wheel (3) and the vehicle body (2), the length of the suspension and/or damping element remains approximately constant.

**11.** Vehicle suspension system in accordance with one of the preceding claims, **characterised in that** a control and/or regulation system is provided, whose adjustment variable is the length of the element (4).

**12.** Vehicle suspension system in accordance with claim 11, **characterised in that** a sensor (1) is provided for detecting any road unevenness present in front of the wheel (3), wherein the output signal of the sensor (1) forms an input variable of the control and/or regulation system.

**13.** Vehicle suspension system in accordance with claim 12, **characterised in that** the sensor measures the distance between the roadway and the vehicle body (2).

**14.** Vehicle suspension system in accordance with claim 12, **characterised in that** the sensor measures the vertical acceleration and/or vertical speed of the front and/or rear wheels.

**15.** Vehicle suspension system in accordance with one of the claims 2 to 14, **characterised in that** the coupling point of the spring element and/or damping element (6) on the lever (9) has a first distance (b) from the one end of the lever (9) and a second distance (a) to the other end of the lever (9), and that the ratio of the second distance (a) to the first distance (b) is equal to the ratio of the unsprung mass formed by the wheel (3) and parts of the wheel suspension to the additional mass (7).

**16.** Vehicle suspension system in accordance with one of the claims 2 to 15, **characterised in that** for driving the wheel (3), a wheel motor is provided which forms the additional mass (7).

**17.** Vehicle suspension system in accordance with claim 16, **characterised in that** the wheel motor effects the length alteration of the element (4).

**18.** Vehicle suspension system in accordance with one of the preceding claims, **characterised in that** a further spring element and/or damping element is arranged parallel to the element (4).

**Revendications**

**1.** Système de suspension pour véhicule comprenant au moins une roue (3) guidée par au moins un bras longitudinal (11), qui prend appui sur une carrosserie de véhicule (2) par le biais d'au moins un élément à ressort et/ou amortisseur (6), sachant que le bras longitudinal (11) est fixé de manière articulée, par son extrémité opposée à la roue (3), en un point (12) de la carrosserie du véhicule (2), **caractérisé en ce qu'**un levier (9) est prévu, entre les extrémités duquel est fixée de manière articulée l'extrémité de l'élément à ressort et/ou amortisseur (6) qui n'est pas fixée à la carrosserie, **en ce qu'**une extrémité du levier (9) est fixée de manière articulée à un premier point d'articulation (14) du bras longitudinal (11) ou d'un porte-roue (17), et **en ce que** l'autre extrémité du levier (9) est relié à une extrémité d'un élément (4) dont la longueur peut varier et dont l'autre extrémité est fixée de manière articulée à un second point d'articulation (15) du bras longitudinal (11) distant du premier point d'articulation (14), au porte-roue (17) ou à la carrosserie (2).

**2.** Système de suspension pour véhicule selon la revendication 1, **caractérisé en ce qu'**une masse additionnelle (7) est prévue au voisinage du point de liaison entre le levier (9) et l'élément (4) de longueur variable.

**3.** Système de suspension pour véhicule selon la revendication 2, **caractérisé en ce que** la masse additionnelle est disposée de telle sorte que, lorsque la longueur de l'élément (4) change, elle se déplace essentiellement perpendiculairement à la voie de roulement.

**4.** Système de suspension pour véhicule selon l'une des revendications précédentes, **caractérisé en ce que** l'une des extrémités du levier (9) est reliée de manière articulée par l'intermédiaire d'un second levier (8) au premier point d'articulation (14) du bras longitudinal (11) ou du porte-roue (17).

**5.** Système de suspension pour véhicule selon l'une des revendications précédentes, **caractérisé en ce que** la zone du point de liaison entre le levier (9) et l'élément (4) de longueur variable est reliée de manière articulée à la carrosserie du véhicule par l'intermédiaire d'un troisième levier (10).

**6.** Système de suspension pour véhicule selon la revendication 5, **caractérisé en ce que** le troisième levier (10) est disposé essentiellement parallèlement au bras longitudinal (11).

**7.** Système de suspension pour véhicule selon l'une des revendications précédentes, **caractérisé en ce**

que l'élément (4) dont la longueur est variable est au moins en partie constitué par un vérin hydraulique.

8. Système de suspension pour véhicule selon l'une des revendications 1 à 6, **caractérisé en ce que** l'élément (4) est constitué par une broche filetée et par un moteur électrique.

9. Système de suspension pour véhicule selon l'une des revendications 2, 7 et 8, **caractérisé en ce que** le moteur électrique forme la masse additionnelle (7).

10. Système de suspension pour véhicule selon l'une des revendications précédentes, **caractérisé en ce que** la longueur de l'élément (4) est à chaque fois changé de telle sorte que la longueur de l'élément amortisseur reste approximativement constante, que l'écart entre la roue (3) et la carrosserie (2) du véhicule diminue ou augmente brièvement.

11. Système de suspension pour véhicule selon l'une des revendications précédentes, **caractérisé en ce qu'**un dispositif de commande et/ou de régulation est prévu, dont la grandeur de réglage est la longueur de l'élément (4).

12. Système de suspension pour véhicule selon la revendication 11, **caractérisé en ce qu'**un capteur (1) est prévu pour détecter les inégalités du terrain à l'avant de la roue (3), le signal de sortie du capteur (1) constituant une grandeur d'entrée du dispositif de commande et/ou de régulation.

13. Système de suspension pour véhicule selon la revendication 12, **caractérisé en ce que** le capteur mesure l'écart entre la voie de roulement et la carrosserie (2).

14. Système de suspension pour véhicule selon la revendication 12, **caractérisé en ce que** le capteur mesure l'accélération verticale et/ou la vitesse verticale des roues avant et/ou arrière.

15. Système de suspension pour véhicule selon l'une des revendications 2 à 14, **caractérisé en ce que** le point d'articulation de l'élément à ressort et/ou amortisseur (6) sur le levier (9) présente un premier écart (b) par rapport à l'une des extrémités du levier (9) et un second écart (a) par rapport à l'autre extrémité dudit levier (9), et **en ce que** le rapport entre le second écart (a) et le premier écart (b) est égal au rapport entre la masse non suspendue constituée par la roue (3) et par des éléments de la suspension de la roue et la masse additionnelle (7).

16. Système de suspension pour véhicule selon l'une des revendications 2 à 15, **caractérisé en ce qu'**un moteur de roue est prévu pour entraîner la roue (3), qui constitue la masse additionnelle (7).

17. Système de suspension pour véhicule selon la revendication 16, **caractérisé en ce que** le moteur de roue fait varier la longueur de l'élément (4).

18. Système de suspension pour véhicule selon l'une des revendications précédentes, **caractérisé en ce qu'**un élément à ressort et/ou amortisseur supplémentaire est disposé parallèlement à l'élément (4).

# FIGUR 1